Europäisches Patentamt

European Patent Office

Office européen des brevets

(11) Publication number: **0 216 338**
**A2**

## (12) EUROPEAN PATENT APPLICATION

(21) Application number: **86112991.4**

(22) Date of filing: **20.09.86**

(51) Int. Cl.⁴: **C03B 37/012** , **C03B 23/04** , **C03B 37/018**

(30) Priority: **26.09.85 US 780430**

(43) Date of publication of application:
**01.04.87 Bulletin 87/14**

(84) Designated Contracting States:
**DE FR GB NL**

(71) Applicant: **POLAROID CORPORATION**
**549 Technology Square**
**Cambridge, Massachusetts 02139(US)**

(72) Inventor: **Mansfield, Robert J.**
**69 Packard Road**
**Stow, MA 01775(US)**

(74) Representative: **Reitzner, Bruno, Dr. et al**
**Patentanwälte Dipl.-Ing. R. Splanemann Dr.**
**B. Reitzner Tal 13**
**D-8000 München 2(DE)**

(54) Method of employing plasma for finishing start rods.

(57) There is disclosed a method of finishing or smoothing the surface of an optical start rod through the use of plasma heat in an atmosphere which prevents contamination of the rod by residual water. Also there is disclosed a method of fabricating an optical waveguide wherein the start rod has deposited thereon silica soot and which is subsequently consolidated by a plasma.

EP 0 216 338 A2

The present invention relates broadly to a method of heat treating a silica start rod by a plasma and, more specifically, to an improved method of using heat of a plasma for finishing silica start rods of the type used in a soot deposition technique.

It is recognized generally that optical fibers are a superior medium of communication. For example, a single fiber can carry hundreds of times more information than a simple metal wire can. However, fiber optic systems have yet to approach the cost-performance characteristics of metal systems. For fiber optic technology to become successful commercially it must be produced at a competitive price. Therefore, it is important from a cost consideration standpoint to produce relatively large quantities at relatively low costs.

Aside from, but related to, production cost considerations, is the criticality of minimizing optical transmission losses to commercially acceptable levels.

Transmission losses or attentuation of light is due primarily to impurities causing scattering and/or absorbing of such light. Optical purity is extremely difficult to attain especially considering the fact that minute quantities of impurities, for instance in the order of several parts per million, can add significantly to transmission losses. This possibility for contamination is compounded when it is considered that several steps are typically involved with the fabrication of optical fibers.

One major technique for fabricating optical fibers in an economical and mass production fashion is the so-called "soot deposition" process. Typically, in this process, glass precursor vapors are introduced into a hydrolyzing flame. The result is formation of adherent particulate material (i.e. soot) which is directed towards a rotating and translating start-up mandrel upon which the soot adheres to form a soot preform. Ordinarily, the start-up mandrel is fabricated from fused silica or doped fused silica. Following deposition, the soot preform is dehydrated and then consolidated into transparent fused' silica. Subsequently both the mandrel and consolidated perform are drawn, whereby the mandrel becomes the core and the consolidated preform becomes the cladding. From a commercial standpoint this approach is highly desirable since the deposition rates are generally rapid. For example, a soot preform capable of forming 20 kilometers of optical fiber may be prepared in a few hours.

One area of potential transmission losses is the interface between the start rod and the preform. This is due primarily to surface defects of the type that include particulate, cracks and scratches on the start rod. Even microscopic defects of the type noted can be troublesome. Such defects are difficult to avoid in the normal handling of such start rods, and they defy easy detection. For minimizing transmission losses it is extremely important to have the surface of the start rod free of contaminants and essentially optically smooth.

A known approach for cleaning and smoothing the start rod is to etch the surface followed by a fire polishing technique. The etching removes the particulate contamination while the fire polishing causes the surface to soften which then allows inherent surface tension to facilitate smoothing of the external surface. However, by virtue of known fire polishing techniques impurities are still formed by reason of the combustion process caused by use of a conventional gas torch. A primary problem arising from conventional fire polishing is introduction of water into the start rod. By water it is meant OH, $H_2$ and $H_2O$. Such water leads to light absorption peaks or zones in the fiber and contributes significantly to transmission losses.

According to the present invention, there is provided a method of finishing a start rod by use of a plasma.

In an illustrated embodiment, the method of finishing a start rod comprises the steps of establishing a plasma within a vessel and of providing a drying agent within the vessel. Included is the step of establishing relative motion between the start rod and the plasma so that successive shell-like peripheral portions of the start rod are heated by the plasma to a temperature which effects smoothing of the start rod surface.

According to such an embodiment, the start rod is heated in the presence of a dehydrating agent to insure that there is no contamination of the start rod by water impurities when subjected to the plasma heat. Further, the embodiment contemplates use of a plasma torch for effecting the heating.

Among the objects of the present invention are, therefore, the provision of a method which finishes or smooths a start rod by the application of heat generated by a plasma; the provision of a method of utilizing a dehydrating agent to prevent any introduction of water impurities in the start rod during smoothing; the provision of a plasma torch to heat the rod; and the provision of a method of producing an optical waveguide fiber by applying silica soot to the smoothed waveguide and consolidating the soot onto the start rod by a plasma consolidation process.

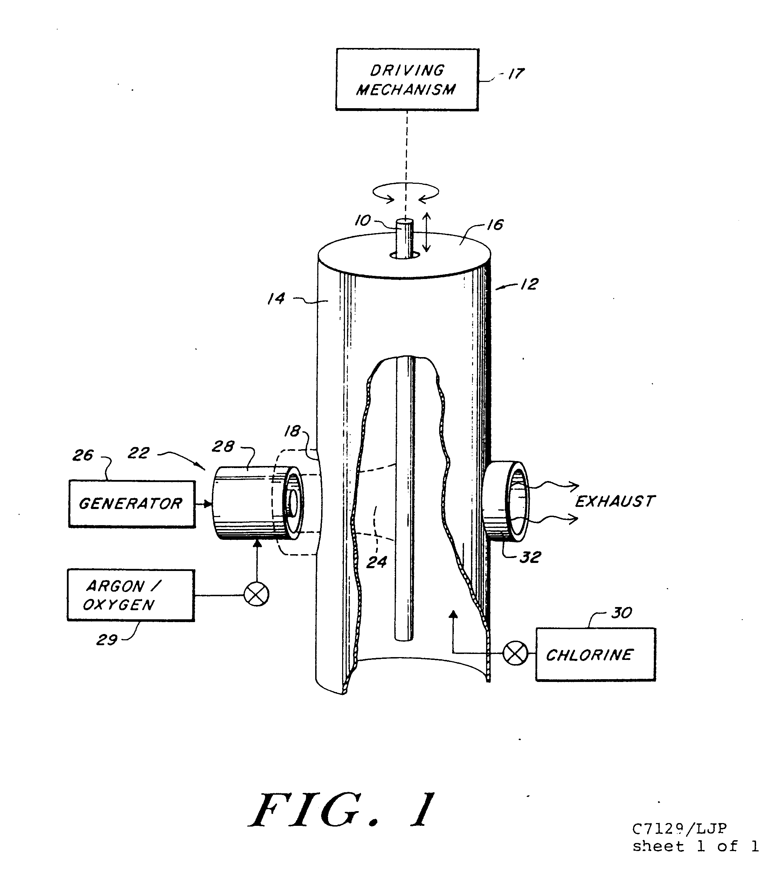

Other objects and further scope of applicability of the present invention will become apparent from the detailed description in conjunction with the accompanying sole drawing which is a diagrammatic view of a start rod being finished in accordance with the present invention.

The drawing depicts a technique for cleaning and polishing a fused silica preform start rod 10 to remove contaminants and smooth the surface of the rod. The heat treating step to be described is done prior to a soot deposition operation. Therefore, a detailed description of the soot deposition technique will be dispensed since it is not necessary for an understanding of the present invention. Preliminary to the plasma polishing or finishing operation, the start rod 10 is etched in a conventional manner to remove particulate contamination present on the start rod surface. Since etching does not form part of the invention a detailed description thereof will be dispensed with. Suffice it to say, however, that a suitable etchant, such as hydrofluoric acid can be used.

In this embodiment, the start rod 10 is inserted into a heat treating vessel 12 which is defined by a high strength silica tube 14. Since a plasma torch is contemplated the walls of the tube will not be subjected to intense temperatures. As a consequence, this allows the vessel walls to be of material other than silica. The silica tube 14 has a diameter and a length adequate for allowing movement of the start rod 10 in a manner which will be described. For example, the tube 14 may have a diameter of several centimeters, (e.g., 1.5 cm) and a length of a meter or more, (e.g. 1.20 m). The ends of the tube 14 are capped with a known sealing assembly only one of which is shown and generally indicated by reference number 16. The sealing assembly 16 allows insertion, as well as rotation and axial translation of the preform start rod 10. A suitable driving mechanism 17 effects rotation and axial movement of the start rod 10.

Between the ends of the tube 14 there is provided an opening 18 which cooperates with a plasma forming means. In this embodiment, the plasma forming means includes a plasma torch apparatus 22 which generates a plasma torch or flame 24. The plasma torch apparatus 22 includes a high frequency electrical generator 26 and a conventional nozzle 28 into which the working gases, such as argon and/or oxygen, are introduced from a source 29. The nozzle 28 forms the plasma in a known manner and directs the torch or flame 24 thereof onto the surface of the start rod 10. The working gases for forming the plasma torch 24 are introduced at a rate which when coupled with the energy produced by the generator 26 is sufficient to heat at least an outer or shell-like peripheral region of the start rod 10 to a temperature which preferably is well above the softening temperature. The temperature may be between the softening temperature and the melting temperature of the start rod material. Temperatures above the melting temperature may be used provided they do not affect more than a thin shell-like region of the rod 10 to be treated. In other words, the heating should be done so that the rod does not deform. For illustration, the temperatures reached may be from about 1800°C to 2000°C. The outer circumferential shell-like region or band has a narrow depth. Usually the depth should be greater than the depth of any surface imperfections to be removed. The noted temperature range is desired because it relatively quickly heats the outer circumferential shell-like region to the temperature necessary to relatively rapidly effect smoothing. When the temperature causes the outer shell to soften, inherent surface tension of the viscous silica will be effective to allow physical smoothing of the surface. Since the polishing or finishing temperatures are so high and the outer shell only of the start rod 10 is to be softened, the start rod 10 is only briefly subjected to the high temperature range. For a start road of 1 cm. diameter, the linear advancement thereof by the driving mechanism may be in the order of 5 cm/min. Obviously, these values are illustrative only. The temperature the start rod 10 is heated to and the depth of softening, are a function of plasma temperature and the duration for which the start rod is subjected to the plasma, and may vary depending on the particular needs desired. Also, such temperature will cause other impurities to evaporate from the surface.

Advantageously, the plasma torch 24, per se, does not introduce any water into the start rod 10. This is significant since, as noted, known fire polishing techniques introduce water into the start rod 10 during the polishing step.

To further prevent any contamination of the start rod 10 by residual water in the atmosphere inside the vessel, the present invention provides for subjecting the start rod to an atmosphere which includes a dehydration agent, such as chlorine. Towards this end, a source 30 of chlorine is connected to the tube 14 and creates a flow passed to the torch 24 and to the exhaust opening 32. The chlorine is initially in a diatomic state. When subjected to the intense temperature of the plasma it turns into a monoatomic form. Chlorine in a monoatomic form reacts better with any water impurities in the vessel.

The present invention also envisions the use of other kinds of plasmas. For example, a plasma fireball may be used through which the start rod may travel. This may be done at a controlled rate to effect the desired heating of the shell-like peripheral portions such that these portions become viscous or soften sufficiently to allow the inherent surface tension thereof to effect a physical smoothing of the exterior surface.

Subsequent to the foregoing approaches for effectuating the desired smoothness, the start rod is subjected to a silica soot deposition operation. The drawings do not show such a soot deposition technique since it is generally well-known. However, the following brief description is given in terms of defining a novel and improved method of making an optical waveguide from a start rod smoothed in the manner indicated above wherein the rod comprises a core that is to be enclosed by a cladding having a lower index of refraction than the core.

In the soot deposition process, glass precursor vapors are introduced into a hydrolyzing flame (not shown). The result is formation of adherent particulate material (i.e., silica soot) which is directed towards a rotating and translating start rod (not shown) which has been finished in accordance with the previously noted steps of the present invention. The soot adheres to the start rod to form a soot preform. The start rod may be doped and the preform may also be doped. Doping may be done by any of several conventional steps, which, per se, do not form an aspect of the present invention. Since the start rod is intended to be the core of the optical waveguide the cladding, which is the soot preform in consolidated form, should, of course, have a lower index of refraction than that of the start rod.

In certain situations, it has been proposed to encompass the start rod with a thin layer of deposited glass soot. This is to form a soot preform which is to be consolidated. The glass soot material may use the same index of refraction as the start rod and may be consolidated. This is done to smooth the surfaces of the start rod or build up a slightly deformed rod by having the thin soot preform when consolidated fill the physical cracks of the start rod. Thereafter, another layer of silica soot is deposited on the consolidated smoothing layer and can also be consolidated.

The present invention envisions that this last mentioned layer can be appropriately doped through suitable and well-known techniques.

Referring to the consolidation process, a plasma fire-ball is created in a heating vessel. A fire-ball with a core temperature of about 30,000°C may be obtained. The periphery of the fire-ball is out of contact with the vessel walls. The nature of a plasma is such that there is a significant heat gradient from its center to its periphery. At the periphery, the temperature is roughly a few hundred degrees centigrade, whereas the center may be 30,000°C.

For slowly lowering the glass soot preform and start rod into and through the plasma a lowering mechanism indicated may be provided. The lowering mechanism may lower the preform and start rod into and through the plasma fire-ball at a rate which allows completion of consolidation. For example, a rate of several millimeters per hour would be sufficient. Of course, the lowering rate is a function of several parameters including the material being sintered, and the sintering or consolidating temperature. Thus, the example given is for purposes of illustration and not of limitation. During consolidation, the soot preform is sintered at which time it consolidates or is fused into a transparent glass body that forms the cladding. The soot preform has already been dehydrated to remove water-related impurities. Following consolidation, the fused silica is withdrawn from the heating vessel, whereupon it may be subsequently drawn by conventional steps into an optical fiber.

Since certain changes may be made in the above-described system and method without departing from the scope of the invention herein involved, it is intended that all matter contained in the description or shown in the accompanying drawing shall be interpreted as illustrative and not in a limiting sense.

## Claims

1. A method of making an optical waveguide fiber comprising a core enclosed by a cladding, comprising the steps of:

establishing a heating zone comprising a plasma or the flame from a plasma torch within a vessel;

establishing a dehydrating atmosphere within said vessel;

effecting relative motion between progressive lengthwise sections of a cleaned consolidated fused silica start rod and said heating zone, the rate of said relative motion through said heating zone being carefully controlled with respect to the temperature of said heating zone such that relatively thin shell-like peripheral portions of said start rod are progressively converted to their viscous state, thereby effecting a smoothing of the exterior surfaces thereof, said progressively heated viscous portions of said start rod being returned to their solid state after leaving said heating zone; and

depositing a silica material in soot form onto the clean, smooth dehydrated exterior surface of said start rod.

2. The invention of Claim 1 wherein said dehydrating atmosphere establishing step comprises the step of introducing diatomic chlorine gas into said vessel whereby the temperature of said heating zone effects a conversion of said chlorine gas into a monoatomic state.

3. The invention of Claim 1 wherein said deposited fused silica soot has an index of refraction less than the index of refraction of said start rod.

4. The invention of Claim 1 wherein said deposited fused silica soot has the same index of refraction as said start rod.

5. The invention of Claim 4 additionally including the step of doping said deposited silica soot with an index of refraction lowering material.

6. The invention of Claim 4 additionally including the step of forming an additional layer of soot over said first deposited fused silica soot, said additional layer having a lower index of refraction than said start rod.

7. The invention of Claim 1 additionally including the steps of:

doping said deposited silica soot so as to produce a layer having a lower index of refraction than said start rod;

providing a vessel having interior glass walls which encompasses said heating zone; and,

introducing the start rod and silica soot into said zone so as to effect consolidation of the soot to form fused cladding of the optical waveguide.

## FIG. 1